# EUROPÄISCHE PATENTSCHRIFT

(11) **EP 3 992 018 B1**
(45) Veröffentlichungstag und Bekanntmachung des Hinweises auf die Patenterteilung: **18.06.2025**
(21) Anmeldenummer: 21204995.1
(22) Anmeldetag: 27.10.2021
(51) Int. Cl.: B60L 53/18, B60L 53/63, B60L 53/65, B60L 53/67, B60L 53/66, B60L 53/68, H01R 31/06, B60L 53/30, B60L 53/53, G07F 15/00, G06Q 20/40, G06Q 20/08, H01B 9/00, H01R 27/00, H02J 7/00, H04W 4/40, G07F 9/00, H01R 13/66, H04W 4/80

(54) **LADEEINRICHTUNG ZUM AUFLADEN DER ANTRIEBSBATTERIE EINES ELEKTROFAHRZEUGS UND VERFAHREN ZUR ERFASSUNG VON ENERGIEVERBRAUCHSDATEN BEIM AUFLADEN VON ELEKTROFAHRZEUGEN**
CHARGING DEVICE FOR CHARGING THE DRIVE BATTERY OF AN ELECTRIC VEHICLE AND METHOD FOR DETECTING ENERGY CONSUMPTION DATA WHILE CHARGING ELECTRIC VEHICLES
DISPOSITIF DE CHARGE PERMETTANT DE CHARGER LA BATTERIE D'ENTRAÎNEMENT D'UN VÉHICULE ÉLECTRIQUE ET PROCÉDÉ DE CAPTURE DES DONNÉES DE CONSOMMATION D'ÉNERGIE LORS DE LA CHARGE DES VÉHICULES ÉLECTRIQUES

(30) Priorität: 02.11.2020 DE 102020128736
(43) Veröffentlichungstag der Anmeldung: 04.05.2022
(73) Patentinhaber: BURY Sp. z o.o., 39-300 Mielec (PL)
(72) Erfinder: BURY, Henryk, 32584 Löhne (DE)
(74) Vertreter: Günther, Constantin

(56) Entgegenhaltungen:
- EP-A2- 2 514 625
- WO-A1-2020/073138
- WO-A2-2012/140486
- DE-A1- 102010 014 417
- DE-A1- 102010 029 118
- DE-A1- 102013 014 527
- DE-B3- 102015 204 070
- US-A1- 2010 134 067
- US-A1- 2011 109 266
- US-A1- 2018 001 776

## Beschreibung

Die Erfindung betrifft eine Ladeeinrichtung, z.B. ein Ladekabel, zum Aufladen der Antriebsbatterie eines Elektrofahrzeugs aus einer zum Aufladen der Antriebsbatterie geeigneten Energiequelle, wobei die Ladeeinrichtung wenigstens einen Anschluss zum Verbinden mit dem Ladeanschluss des Elektrofahrzeugs und wenigstens einen Anschluss zum Verbinden mit der zum Aufladen der Antriebsbatterie geeigneten Energiequelle hat. Die Erfindung betrifft außerdem ein Verfahren zur Erfassung von Energieverbrauchsdaten beim Aufladen von Elektrofahrzeugen aus verschiedenen Energiequellen.

Es sind Ladekabel für Elektrofahrzeuge bekannt, die einerseits an einer Standardsteckdose im Industrie- oder Haushaltsbereich angeschlossen sind und die Energie von dort beziehen und diese andererseits an ein Fahrzeug mit einer Speicherbatterie über eine genormte Steckverbindung wieder abgeben. Die EP 3 453 559 B1 offenbart beispielsweise solch ein System. Die Energie wird bezogen aus einer einphasigen oder dreiphasigen Wechselspannung in Höhe der für verschiedene Länder üblichen Werte, z.B. 230V / 50Hz in Europa. Diese Energie wird unverändert an das Fahrzeug weitergeleitet, wo sie in eine zum Laden der Fahrzeugbatterie geeignete Gleichspannung umgewandelt wird. Das Ladekabel übernimmt typischerweise einige Schutz- und Steuerfunktionen. Es überwacht die Ströme durch die Phasen und den Nullleiter und löst bei einer Differenz ab einem bestimmten Schwellwert Alarm aus und schaltet die spannungführenden Leiter ab, um Personen, über die der Differenzstrom fließen könnte, zu schützen. Diese Überwachung gilt sowohl für Wechsel- als auch für Gleichdifferenzströme. Auch werden Überströme erfasst, wobei auch hier ab einem Schwellwert die spannungsführenden Leiter abgeschaltet werden, um die Leitungen vor Überlastung und damit vor Überhitzung zu schützen. Kurzschlüsse werden über diesen Schutz ebenfalls abgedeckt.

An den üblichen Ladesäulen für Elektrofahrzeuge wird die seit Ladebeginn übertragene Energiemenge erfasst und angezeigt. Hierdurch lassen sich bei bekanntem Energiepreis die bisher angefallenen Energiekosten bestimmen. Soll eine Abrechnung über die Energiekosten durchgeführt werden, ist es bisher erforderlich, manuell die Energiekosten für verschiedene Fahrzeuge und verschiedene Energiequellen, d.h. Entnahmestellen, separat zu erfassen und zu notieren.

Eine solche manuelle Erfassung ist aufwendig, weil aus abrechnungstechnischen Notwendigkeiten die Energiekosten für verschiedene Fahrzeuge separat erfasst werden müssen, bzw. die Energiekosten auch für verschiedene Energieentnahmestellen separat erfasst werden müssen. Nutzt beispielsweise eine Person zwei Elektrofahrzeuge, z.B. ein Privatfahrzeug und ein Firmenfahrzeug, und lädt diese Fahrzeuge regelmäßig zuhause, ist es für sie wichtig, die entnommenen Energiekosten für beide Fahrzeuge separat zu erfassen, da er nur die Energiekosten für das Firmenfahrzeug von seinem Arbeitgeber erstattet bekommt. Weiterhin bekommt er für das Firmenfahrzeug auch nur die Energiekosten erstattet, die zuhause entstehen, und nicht, die, die auf dem Parkplatz seines Arbeitgebers anfallen. Der Arbeitnehmer müsste nun bei jedem Ladevorgang die Energiekosten dieses Vorgangs an die richtige Stelle einer Tabelle einfügen, um eine lückenlose Dokumentation der Ladevorgänge sortiert nach Fahrzeug und Stromentnahmestelle zu erhalten.

DE 10 2013 014 527 A1 beschreibt ein Verfahren zum dynamischen und aktuellen Bereitstellen von Informationen über Ladestationen für Elektrofahrzeuge. Hierzu werden Ladestationsinformationen mit einer Ladestationskennung und einer Ortsinformation der Ladestation in einem Zentralrechner abgespeichert. Eine von einem Nutzer abgesendete Ladeabfrage enthält über die Identifikation einer Mobilstation mit der zugehörigen geographischen Information eine Ortsinformation für die Ladeanfrage. Aus der Mehrzahl von gespeicherten Ladestationsinformationen werden entsprechend der geographischen Information der Mobilstation, über die eine Ladeanfrage übermittelt wurde, ein Tupel aus Ladestationsinformationen durch Vergleich mit der jeweiligen Ortsinformation der Ladestation ausgewählt und zusammen mit aktuellen Statusinformationen an den Nutzer übermittelt.

US 2010/0134067 A1 offenbart eine Ladestation für Elektrofahrzeuge, die mit einer Steuerungseinheit zur Steuerung einer Gruppe von Ladestationen verbunden ist.

Elektrischer Strom wird dynamisch auf die Ladestationen verteilt. Die Freigabe des Zugangs zur Ladestation wird über Fahrzeugbetreiberinformationen, wie Konto- und Kontaktinformationen des Betreibers, wie insbesondere Name, Adresse, E-Mailadresse und Telefonnummer freigegeben. Hierzu wird ein Anmeldeportal bereitgestellt. Die Fahrzeugbetreiber können über ein Nutzerinterface ihren Benutzernamen, Passwort und Zahlungsinformationen eingeben.

EP 2 514 625 A2 beschreibt ein Verfahren zum Laden von Batterien eines Elektrofahrzeugs mit Ladestationen, wobei eine Autorisierung mit biometrischen Identitätsinformationen für berechtigte Personen erfolgt. Diese berechtigte Person kann dann auf seine Kosten jedes beliebige Elektrofahrzeug an der so freigegebenen Ladestation aufladen.

Aus der DE 10 2015 204 070 B3 ist ein Energieübertragungsverbinder, ein System und Verfahren bekannt. Aus der US 2018/0001776 A1 ist eine Ladekabel-integrierte Kontrollbox zum Aufladen eines Elektrofahrzeugs und ein Verfahren zum Aufladen eines Elektrofahrzeugs mit einem solchen Ladekabel bekannt. Aus der DE 10 2010 014 417 A1 ist ein intelligentes Ladekabel für Elektrofahrzeuge bekannt. Aus der WO 2020/073138 A1 ist ein smartes Ladekabel für Elektrofahrzeuge bekannt.

Der Erfindung liegt daher die Aufgabe zu Grunde, die Abrechnung der Energiekosten beim Aufladen von Elektrofahrzeugen zu vereinfachen.

Diese Aufgabe wird mit einer Ladeeinrichtung gemäß Anspruch 1 gelöst. Dabei ist
a) die Ladeeinrichtung dazu eingerichtet, eine das angeschlossene Elektrofahrzeug eindeutig kennzeichnende Fahrzeugkennung zu erfassen,
b) wobei die Ladeeinrichtung dazu eingerichtet ist, die bei einem Ladevorgang aus der Energiequelle in das Elektrofahrzeug eingeladene Energiemenge oder eine die Energiemenge charakterisierende Kenngröße zu erfassen und mit einer Zuordnung zur Fahrzeugkennung des Elektrofahrzeugs in einer Speichereinrichtung zu speichern.

Als Elektrofahrzeug im Sinne der vorliegenden Erfindung werden insbesondere Personenkraftwagen, Lastkraftwagen und Motorräder verstanden, die über einen Elektroantrieb für den Antrieb des Elektrofahrzeuges und eine Antriebsbatterie zur elektrischen Versorgung des Elektroantriebs verfügen. Elektrofahrzeuge in diesem Sinne sind insbesondere reine Elektrofahrzeuge ohne Verbrennerantrieb sowie Elektrofahrzeuge mit Hybridantrieb, soweit ein Ladeanschluss zum externen Aufladen der Antriebsbatterie von einer vom Elektrofahrzeug getrennten Energiequelle vorhanden ist. Das Elektrofahrzeug wird nachfolgend auch kurz als ''Fahrzeug'' bezeichnet.

Die Erfindung hat den Vorteil, eine erweiterte Funktionalität der Ladeeinrichtung, z.B. eines Ladekabels, anzubieten, wobei eine manuelle oder voll- oder teilautomatische Erkennung des angeschlossenen Fahrzeugs und dann automatisch eine Zuordnung der entnommenen Energiemenge zu diesem Fahrzeug erfolgt.

Für die Erfassung der Fahrzeugkennung sind verschiedene Ausgestaltungen der Ladeeinrichtung möglich, zum Beispiel mit einer Eingabevorrichtung für die manuelle Eingabe der Fahrzeugkennung durch den Benutzer, zum Beispiel in Form einer Tastatur oder eines Touchpad. Die Ladeeinrichtung kann auch dazu eingerichtet sein, eine vollautomatische Erfassung der Fahrzeugkennung durchzuführen, zum Beispiel durch Abfragen der VIN vom Fahrzeug oder Erfassen eines anderen das Fahrzeug identifizierenden Erkennungsmerkmals. Die Erfassung kann auch teilweise manuell/automatisch erfolgen, zum Beispiel indem der Benutzer über ein mobiles Endgerät, zum Beispiel ein Smartphone, ein das Fahrzeug identifizierendes Erkennungsmerkmal wie zum Beispiel das Kfz-Kennzeichen oder einen am Fahrzeug angebrachten Barcode aufnimmt, zum Beispiel mittels einer Kamera, und die aufgenommene Information über eine Datenschnittstelle zur Ladeeinrichtung übertragen wird.

Eine Ausführungsform zur Erfassung der Fahrzeugkennung ist die manuelle Eingabe zu Beginn des Ladevorgangs. Der Benutzer wählt über ein Userinterface, z.B. ein Display mit Tasten oder Touchfeld, das im Ladestecker oder an einer anderen Stelle der Ladeeinrichtung integriert ist, ein zuvor auf dieser Ladeeinrichtung angemeldetes Fahrzeug aus und startet den Ladevorgang. Die nun bis zum Ende des Ladevorgangs übertragene Energiemenge wird diesem Fahrzeug zugeordnet. Die Auswahl kann alternativ auch über eine Smartphone-App geschehen, wobei das Smartphone über eine Funkverbindung mit der Ladeeinrichtung verbunden ist. Auf diese Weise kann auch die Entnahmestelle ausgewählt werden, zu der die entnommene Energie zugeordnet wird.

Bei einer weiteren Ausführungsform wird das Fahrzeug über Informationen aus der Fahrzeugkommunikation identifiziert. Die Kommunikation kann sowohl drahtgebunden als auch drahtlos erfolgen. Bei der drahtgebundenen Kommunikation werden die Informationen beispielsweise über die Powerline-Kommunikation nach ISO 15118 übertragen. Hierbei werden die Daten mit einer Hochfrequenz auf die Stromleitung moduliert und an der Gegenstelle wieder ausgekoppelt und demoduliert. Da zwischen der Ladeeinrichtung und dem Fahrzeug eine galvanische Verbindung besteht, kann diese Art der Kommunikation problemlos genutzt werden. Nachdem der Benutzer den Ladestecker an den Ladeanschluss des Elektrofahrzeugs gesteckt hat, identifiziert sich das Fahrzeug beispielsweise mit der Übertragung der VIN (Vehicle Identification Number). Diese ist für jedes Fahrzeug eindeutig und ermöglicht die Zuordnung der Ladung zum Fahrzeug. Die Identifizierung ist aber nicht beschränkt auf die Übertragung der VIN, es sind auch andere übertragene Merkmale möglich, die das Fahrzeug gegenüber diesem Ladekabel möglichst eindeutig identifiziert. Beispielsweise könnte die Information über die verbauten Optionen in diesem Fahrzeug aufgrund der enorm vielen Kombinationsmöglichkeiten ebenfalls als eindeutige Fahrzeugkennung gelten.

Weitere Möglichkeiten zur Erfassung der Fahrzeugkennung wäre wenigstens eine Funkverbindung zwischen der Ladeeinrichtung und dem Fahrzeug, beispielsweise über Bluetooth oder WLAN. Die MAC-Adresse des Fahrzeugs könnte als eindeutige Fahrzeugkennung und somit als Identifizierungsmöglichkeit dienen. Auch die Anbringung eines Bluetooth- oder WLAN-Beacons im oder am Fahrzeug und die Auswertung der ausgesandten Funkdaten durch die Ladeeinrichtung wäre als Identifizierungsmerkmal geeignet. Um eine Falschidentifizierung aufgrund von Überreichweiten zu benachbarten Fahrzeugen zu vermeiden, kann eine Nahfeldfunkverbindung eingesetzt werden, z.B. zwischen einem in der Ladeeinrichtung verbauten Transceiver und einer am Fahrzeug, z.B. in der Nähe des Ladeanschlusses des Fahrzeugs, angebrachten RFID-Tags.

Die Ladeeinrichtung kann diesen gespeicherten Daten zusätzlich noch weitere in der Ladeeinrichtung bestimmte Daten zuordnen und ebenfalls speichern, wie zum Beispiel zeitliche Daten des Ladevorgangs, zum Beispiel Anfangszeitpunkt und Endzeitpunkt.

Die Speichereinrichtung kann eine Speichereinrichtung der Ladeeinrichtung sein, d.h. ein in die Ladeeinrichtung integrierter Speicher, und/oder eine entfernte Speichereinrichtung, wie zum Beispiel ein über ein Datennetzwerk mit der Ladeeinrichtung verbundener oder verbindbarer Server. Beispielsweise kann die Speicherung der Daten über das Internet durchgeführt werden, zum Beispiel in einer Cloud. In einer vorteilhaften Ausgestaltung der Erfindung können zugleich beide Arten der Speicherung durchgeführt werden, d.h. die Speicherung der Daten in einer Speichereinrichtung der Ladeeinrichtung und zusätzlich in einer entfernten Speichereinrichtung.

Gemäß der Erfindung ist vorgesehen, dass
a) die Ladeeinrichtung dazu eingerichtet ist, eine die angeschlossene Energiequelle eindeutig kennzeichnende Energiequellenkennung zu erfassen,
b) wobei die Ladeeinrichtung dazu eingerichtet ist, die erfasste eingeladene Energiemenge oder die die Energiemenge charakterisierende Kenngröße mit einer Zuordnung zur Energiequellenkennung der Energiequelle in der Speichereinrichtung zu speichern.

Dies hat den Vorteil, dass auch die für das Laden genutzte Energiequelle, nachfolgend auch Entnahmestelle genannt, erfasst werden kann, um diese ebenfalls in den zu speichernden Daten getrennt zu erfassen.

Für die Erfassung der Energiequellenkennung sind verschiedene Ausgestaltungen der Ladeeinrichtung möglich, zum Beispiel mit einer Eingabevorrichtung für die manuelle Eingabe der Energiequellenkennung durch den Benutzer, zum Beispiel in Form einer Tastatur oder eines Touchpad. Die Ladeeinrichtung kann auch dazu eingerichtet sein, eine vollautomatische Erfassung der Energiequellenkennung durchzuführen, zum Beispiel durch Abfragen der Energiequellenkennung von der Energiequelle über eine Datenleitung oder über die Energieversorgungsleitung, über die auch der Ladestrom fließt. Die Erfassung kann auch teilweise manuell/automatisch erfolgen, zum Beispiel indem der Benutzer mittels der Ladeeinrichtung oder über ein mobiles Endgerät, zum Beispiel ein Smartphone, eine Energiequellenkennung aufnimmt, zum Beispiel mittels einer Kamera oder einem Barcode-Leser, und die aufgenommene Information ggf. über eine Datenschnittstelle zur Ladeeinrichtung übertragen wird. Die Energiequelle kann eine von außen sichtbare und daher optisch erfassbare Energiequellenkennung haben, z.B. eine Seriennummer oder einen Barcode.

Die Identifizierung der Energiequelle kann in einer weiteren Ausführung durch das Anbringen und Auslesen eines Beacons für eine Funkverbindung, z.B. nach dem Bluetooth- oder WLAN-Standard, erfolgen. Auch eine Nahfeldfunkverbindung ist hier möglich, z.B. indem ein RFID-Tag an der Energiequelle angebracht wird.

In einer anderen Ausführung zur Entnahmestellen-Identifizierung werden charakteristische Signale auf den einzelnen Leitern der Stromversorgung ausgewertet. Ein geeignetes Verfahren zur Übertragung von Daten ist die Powerline-Kommunikation, z.B. nach dem Standard IEEE-1901-FFT. Über die Auswertung von eindeutigen Informationen dieser Kommunikation, z.B. der MAC-Adressen der Kommunikationsteilnehmer, kann auch hier auf eine eindeutige Identifizierung der Energiequelle geschlossen werden, da Powerline-Adapter typischerweise lokal und nicht mobil verwendet werden. Auch andere Merkmale der Stromleitungen, insbesondere aufmodulierte Hochfrequenzsignale, sind zur Identifizierung geeignet. Wenn es keine Signale gibt, ist es auch denkbar, ein Gerät eigens für diesen Zweck in der Nähe der Energiequelle zu installieren. Z.B. könnte dort ein Powerline-Adapter installiert werden, der ständig versucht sich mit einem anderen Gerät zu verbinden, und dabei seine MAC-Adresse sendet. Die MAC-Adresse kann dann von der Ladeeinrichtung als eine die angeschlossene Energiequelle eindeutig kennzeichnende Energiequellenkennung verwenden.

Die Identifizierung der Stromentnahmestelle dient nicht nur zur getrennten Energieerfassung, sondern kannn auch zur Konfiguration von Parametern des Ladevorgangs. Ist beispielsweise bekannt, dass an einer bestimmten Steckdose nur 6A entnommen werden dürfen, so stellt sich die Ladeeinrichtung automatisch auf einen Maximalstrom von 6A ein und kommuniziert dies an das Fahrzeug.

Gemäß einer vorteilhaften Weiterbildung der Erfindung ist vorgesehen, dass die Ladeeinrichtung dazu eingerichtet ist, anhand der Energiequellenkennung wenigstens einen Ladesteuerungsparameter zu bestimmen, wobei die Ladeeinrichtung dazu eingerichtet ist, die an die Antriebsbatterie abgegebene Ladeleistung in Abhängigkeit vom Ladesteuerungsparameter einzustellen. Auf diese Weise kann der Ladevorgang automatisch an die Leistungsfähigkeit der Energiequelle angepasst werden. Die Ladeeinrichtung kann die an die Antriebsbatterie abgegebene Ladeleistung z.B. durch interne Leistungssteuerung und/oder Kommunikation mit Elektrofahrzeug entsprechend dem wenigstens einen Ladesteuerungsparameter anpassen.

Die erfassten Energiedaten, aufgeteilt nach Fahrzeugen und Entnahmestellen, werden typischerweise in der Elektronik des Ladekabels, die auch einen Speicher enthält, gespeichert. Zusätzlich werden diese Daten nach Bedarf über eine Funkverbindung abgerufen und in einem Smartphone gespeichert und/oder in die Cloud übertragen. Dort geschieht mit geeigneter Software die Auswertung der Daten und die Dokumentation.

Es ist denkbar, dass für die Ladung des Fahrzeugs mehrere Ladeeinrichtungen oder Ladekabel an verschiedenen Orten benutzt werden. Durch die Kommunikationsmöglichkeiten über das Internet liefern alle Ladeeinrichtungen oder Ladekabel die Daten in die Cloud, wo die Energieverbrauchsdaten für eine bestimmte Entnahmestelle und ein bestimmtes Fahrzeug von unterschiedlichen Ladeeinrichtungen oder Ladekabeln wieder zusammengeführt werden. Somit erhält der Benutzer eine Dokumentation, die mehrere Ladeeinrichtungen oder Ladekabel umfasst.

Gemäß der Erfindung ist vorgesehen, dass die Ladeeinrichtung dazu eingerichtet ist, die erfasste eingeladene Energiemenge oder die die Energiemenge charakterisierende Kenngröße mit einer Zuordnung zu einer die Ladeeinrichtung eindeutig kennzeichnenden Ladeeinrichtungskennung in der Speichereinrichtung zu speichern, wobei es vorteilhaft ist, die Speicherung in einer externen, von der Ladeeinrichtung entfernten Speichereinrichtung durchzuführen, z.B in der Cloud, einem mit dem Internet verbundenen Server oder einem mobilen Endgerät. Dies hat den Vorteil, dass die Energieverbrauchsdaten zusätzlich nach den verwendeten Ladeeinrichtungen aufgeschlüsselt werden können.

Gemäß einer vorteilhaften Weiterbildung der Erfindung ist vorgesehen, dass die Ladeeinrichtung wenigstens ein GNSS-Modul für die satellitengestützte Ortung hat, z.B. nach dem GPS-Standard (GNSS - Global Navigation Satellite System). Die Ladeeinrichtung ist dazu eingerichtet, eine mittels des GNSS-Moduls erfasste globale Position in der Speichereinrichtung zu speichern und/oder an einen Empfänger zu übertragen. Hierdurch kann die Funktionalität der Ladeeinrichtung noch erheblich weiter gesteigert werden.

Beispielsweise können hierdurch die Ortskoordinaten der für den Ladevorgang genutzten Energiequelle bestimmt werden. Auch hierdurch wird eine Möglichkeit geschaffen, die verwendete Energiequelle eindeutig zu identifizieren und somit anhand der Ortskoordinaten eine die Energiequelle eindeutig kennzeichnende Energiequellenkennung zu bestimmen.

Ganz allgemein kann durch diese Funktionalität die Position eines Ladevorgangs des Elektrofahrzeuges erfasst und gespeichert werden. Zudem kann die erfasste Position auch dann sinnvoll genutzt werden, wenn die Ladeeinrichtung gerade nicht für einen Ladevorgang genutzt wird, sondern beispielsweise im Elektrofahrzeug mitgeführt wird oder anderweitig transportiert wird. Beispielsweise kann hierdurch die Ortung einer gestohlenen Ladeeinrichtung oder eines gestohlenen Fahrzeugs, in dem die Ladeeinrichtung transportiert wird, erfolgen.

Gemäß einer vorteilhaften Weiterbildung der Erfindung ist vorgesehen, dass die Ladeeinrichtung eine Pufferbatterie aufweist, durch die zumindest Teile der Ladeeinrichtung auch dann weiter mit elektrischer Energie versorgt sind, wenn die Ladeeinrichtung nicht mit der zum Aufladen der Antriebsbatterie geeigneten Energiequelle verbunden ist. Dies hat den Vorteil, dass die Ladeeinrichtung auch dann einzelne Funktionen, die elektrische Energie benötigen, durchführen kann, wenn sie nicht bei einem Ladevorgang mit der Energiequelle verbunden ist. Beispielsweise können ein Kommunikationsmodul oder sonstige für eine Kommunikationsfunktion der Ladeeinrichtung notwendige Komponenten durch die Prüferbatterie mit elektrischer Energie versorgt werden. Auch das GNSS-Modul kann über die Pufferbatterie versorgt werden.

Gemäß einer vorteilhaften Weiterbildung der Erfindung ist vorgesehen, dass die Ladeeinrichtung wenigstens eine Kommunikationsschnittstelle hat, wobei die Ladeeinrichtung eine Kommunikationsfunktion hat, die dazu eingerichtet ist, über die Kommunikationsschnittstelle mit einem mobilen Endgerät, einem Server und/oder der zum Aufladen der Antriebsbatterie geeigneten oder angeschlossenen Energiequelle zu kommunizieren. Dies hat den Vorteil, dass die Ladeeinrichtung dem Benutzer erweiterte Kommunikationsfunktionen bereitstellt, zum Beispiel für eine Kommunikation mit einem Smartphone oder einem sonstigen mobilen Endgerät, oder für eine Kommunikation mit dem Internet, zum Beispiel für die Speicherung von Energieverbrauchsdaten in der Cloud.

Die Kommunikationsschnittstelle kann eine drahtgebundene oder eine drahtlose Kommunikationsschnittstelle sein. Die drahtgebundene Kommunikationsschnittstelle kann zum Beispiel eine Schnittstelle für die Powerline-Kommunikation sein. Als drahtlose Kommunikationsschnittstelle können eines oder mehrere der folgenden Komponenten in der Ladeeinrichtung vorhanden sein: Mobilfunk-Modul eines zellularen Mobilfunknetzes, WLAN-Modul, Bluetooth-Modul. Die Ladeeinrichtung kann auch eine oder mehrere drahtgebundene Kommunikationsschnittstellen und eine oder mehrere drahtlose Kommunikationsschnittstellen haben.

Alternativ oder zusätzlich zu der Auswertung der Satellitensignale kann auch die Auswertung der Zelleninformationen bei der Mobilfunkkommunikation zur Identifizierung der Stromentnahmestelle dienen. Beispielsweise kann die Ladeeinrichtung dazu eingerichtet sein, eine die angeschlossene Energiequelle eindeutig kennzeichnende Energiequellenkennung anhand der Zelleninformationen bei der Mobilfunkkommunikation zu erfassen. Dieses ist immer möglich, solange die Entnahmestellen, die zu unterscheiden sind, sich in einem größeren Abstand befinden als die Auflösung der durch eine bestimmte Ortungstechnologie erreichten Lokalisierung. Somit können auch in bestimmten Situationen die sichtbaren WLAN- oder Bluetooth Accesspoints für die Identifizierung der Entnahmestelle herangezogen werden.

Gemäß einer vorteilhaften Weiterbildung der Erfindung ist vorgesehen, dass die Kommunikationsfunktion dazu eingerichtet ist, über die Kommunikationsschnittstelle wenigstens einen Ladesteuerungsparameter zu empfangen, wobei die Ladeeinrichtung dazu eingerichtet ist, die an die Antriebsbatterie abgegebene Ladeleistung in Abhängigkeit vom empfangenen Ladesteuerungsparameter einzustellen. Hierdurch kann die Steuerung von Parametern des Ladevorgangs weiter verbessert werden. Der Ladesteuerungsparameter kann beispielsweise vom Benutzer über ein mobiles Endgerät eingegeben und an die Ladeeinrichtung übertragen werden.

Gemäß einer vorteilhaften Weiterbildung der Erfindung ist vorgesehen, dass die Kommunikationsfunktion dazu eingerichtet ist, über die Kommunikationsschnittstelle den Ladezustand der Antriebsbatterie, die Ladegeschwindigkeit, die aktuelle Fahrreichweite des Elektrofahrzeugs und/oder die verbleibende Zeit bis zum Erreichen eines bestimmten Ladezustands der Antriebsbatterie zu übertragen. Dies hat den Vorteil, dass die Ladeeinrichtung dem Benutzer erweiterte Informations- Funktionalitäten bereitstellt. Je nach Art des Elektrofahrzeuges können eine, mehrere oder alle der zuvor genannten Daten auch schon durch das Elektrofahrzeug bereitgestellt werden. Durch die Realisierung einer solchen Kommunikationsfunktionalität der Ladeeinrichtung kann dem Benutzer der Ladeeinrichtung aber unabhängig vom jeweils verwendeten Elektrofahrzeug immer der gleiche Informationsumfang bereitgestellt werden.

Gemäß einer vorteilhaften Weiterbildung der Erfindung ist vorgesehen, dass die Kommunikationsfunktion dazu eingerichtet ist, über die Kommunikationsschnittstelle eine Angabe über die von der zum Aufladen der Antriebsbatterie geeigneten Energiequelle verfügbaren Ladeleistung zu empfangen, wobei die Ladeeinrichtung dazu eingerichtet ist, die an die Antriebsbatterie abgegebene Ladeleistung an die verfügbare Ladeleistung anzupassen, zumindest sofern diese die für die Antriebsbatterie maximal zulässige Ladeleistung nicht übersteigt. Hierdurch kann die Steuerung von Parametern des Ladevorgangs weiter verbessert werden. Zudem wird eine Überlastung der Energiequelle automatisch vermieden, was z.B. wichtig ist, wenn andere Verbraucher im Haushalt schon viel Leistung entnehmen, und bei zusätzlicher voller Ladeleistung des Elektrofahrzeugs der Netzanschluss überlastet wird.

Die Ladeeinrichtung kann zum Beispiel einen an den Ladeanschluss des Elektrofahrzeuges anschließbaren Ladestecker oder einen Anschluss für einen solchen Ladestecker haben, zum Beispiel für ein Adapterkabel.

Gemäß der Erfindung ist vorgesehen, dass die Ladeeinrichtung als portable, im Elektrofahrzeug mitführbare Ladeeinrichtung ausgebildet ist. Dies hat den Vorteil, dass der Benutzer seine Ladeeinrichtung jeweils im gerade benutzten Elektrofahrzeug mitführen und für das Aufladen nutzen kann, zum Beispiel bei einem häufigen Wechsel von Fahrzeugen oder bei der Nutzung von Mietfahrzeugen.

Gemäß einer vorteilhaften Weiterbildung der Erfindung ist vorgesehen, dass die Ladeeinrichtung als Ladekabel oder Teil eines Ladekabels des Elektrofahrzeugs ausgebildet ist. Dies hat den Vorteil, dass das Ladekabel bereits die zuvor erläuterten Funktionalitäten bereitstellt. Es ist insbesondere kein zusätzliches Gerät oder ein zusätzliches Standard-Ladekabel erforderlich.

Gemäß einer vorteilhaften Weiterbildung der Erfindung ist vorgesehen, dass die Ladeeinrichtung dazu eingerichtet ist, anhand der erfassten eingeladenen Energiemenge oder der die Energiemenge charakterisierenden Kenngröße wenigstens einen Parameter des aktuellen Ladevorgangs oder eines späteren Ladevorgangs zu beeinflussen, z.B. wenn die Energiemenge bzw. die Kenngröße einen vorgegebenen Grenzwert erreicht. So kann als Parameter eines aktuellen oder späteren Ladevorgangs beispielsweise das Ende des Ladevorgangs eingeleitet werden, wenn die Energiemenge bzw. die Kenngröße einen vorgegebenen Grenzwert erreicht, z.B. eine maximale Energiemenge, die eingeladen werden soll, oder maximale Energiekosten. Es können auch andere Parameter des Ladevorgangs beeinflusst werden, wie z.B. die Ladeleistung. Beispielsweise kann bei Erreichen einer vorgegebenen eingeladenen Energiemenge auf eine erhöhte oder verringerte Ladeleistung umgeschaltet werden, beispielsweise um von günstigeren Tarifen zu profitieren.

Gemäß einer vorteilhaften Weiterbildung der Erfindung ist vorgesehen, dass die Ladeeinrichtung dazu eingerichtet ist, wenigstens einen Zeitparameter des Ladevorgangs zu erfassen, z.B. die Dauer des Ladevorgangs und/oder den aktuellen Zeitpunkt des Ladevorgangs, den wenigstens einen Zeitparameter mit wenigstens einem Referenz-Zeitparameter in Beziehung zu setzen und, wenn dabei die Erfüllung eines vorgegebenen Kriteriums festgestellt wird, über wenigstens eine Kommunikationsschnittstelle eine Nachricht an ein entferntes Gerät auszusenden und/oder ein Signal an der Ladeeinrichtung auszugeben. Auf diese Weise kann dem Benutzer der Ladeeinrichtung eine Hilfestellung gegeben werden, um zu vermeiden, den Ladevorgang in Zeiträume mit erhöhten Kosten auszudehnen, beispielsweise wenn ab einer bestimmten Ladedauer oder ab einer bestimmten Uhrzeit erhöhte Parkgebühren oder Blockiergebühren an einer öffentlichen Ladesäule anfallen. Der Referenz-Zeitparameter kann z.B. eine vorgegebene maximale Dauer des Ladevorgangs oder ein gewünschter Endzeitpunkt des Ladevorgangs sein. Ist beispielsweise an einer bestimmten Energiequelle ein Ladevorgang für eine Dauer von 2 Stunden kostengünstig und nach Ablauf von 2 Stunden fallen erhöhte Gebühren an, so kann die Ladeeinrichtung z.B. nach 1,5 Stunden eine Vorwarnung an den Benutzer senden, z.B. an dessen Smartphone, und bei Ablauf der 2 Stunden eine finale Warnung. Die über die Kommunikationsschnittstelle gesendete Nachricht kann z.B. in Form einer SMS an ein Mobilfunkgerät gesendet werden, oder über andere Schnittstellen wie Bluetooth oder WLAN, z.B. als Push-Nachricht. Um ein Signal an der Ladeeinrichtung auszugeben, kann die Ladeeinrichtung einen eigenen Signalgeber haben, z.B. einen optischen Signalgeber oder einen akustischen Signalgeber oder beides.

Somit kann als ein weiterer Parameter, der bei der Verbindung mit einer bestimmten Energieentnahmestelle erfasst wird, die Zeit berücksichtigt werden, in der die Ladeeinrichtung mit der Entnahmestelle verbunden ist. Bei Erreichen der vorgegebenen Verweilzeit sendet die Ladeeinrichtung eine Information an ein vorgegebenes Kommunikationsgerät, z.B. eine SMS an ein Mobilfunkgerät. Andere Benachrichtigungsmethoden sind ebenfalls möglich, beispielsweise Pushnachrichten an ein mit dem Internet verbundenes Kommunikationsgerät oder Nachrichten an direkt verbundene Kommunikationsgeräte über z.B. Bluetooth oder WLAN. Ein akustisches Signal von einem Signalgeber innerhalb der Ladeeinrichtung ist ebenfalls möglich. Die gesendeten Nachrichten umfassen die Information über das Erreichen der maximalen Verweilzeit, aber auch Warnungen vor Erreichen dieser Zeit.

Die eingangs genannte Aufgabe wird außerdem gelöst durch ein Verfahren zur Erfassung von Energieverbrauchsdaten beim Aufladen von Elektrofahrzeugen aus verschiedenen Energiequellen gemäß Anspruch 12. Das Verfahren umfasst folgende Schritte:
a) die für das Aufladen der Antriebsbatterie eines jeweiligen Elektrofahrzeugs verwendeten Ladeeinrichtungen erfassen die bei einem Ladevorgang aus der Energiequelle in das Elektrofahrzeug eingeladene Energiemenge oder eine die Energiemenge charakterisierende Kenngröße und speichern diese mit einer Zuordnung zu einer das Elektrofahrzeug eindeutig kennzeichnenden Fahrzeugkennung als Energieverbrauchsdaten in einer Speichereinrichtung,
b) aus den in der Speichereinrichtung gespeicherten Energieverbrauchsdaten wird für jedes einzelne Elektrofahrzeug oder für jeweilige Gruppen von Elektrofahrzeugen eine Energieverbrauchsaufstellung erstellt.

Auch hierdurch können die zuvor erläuterten Vorteile realisiert werden. Die Ladeeinrichtungen können dabei Ladeeinrichtungen der zuvor erläuterten Art sein. Dem Benutzer kann eine Energieverbrauchsaufstellung bereitgestellt werden, die übersichtlich die Energieverbrauchsdaten für jedes einzelne Elektrofahrzeug oder für jeweilige Gruppen von Elektrofahrzeugen wiedergibt, zum Beispiel zusammen mit den jeweiligen Ladezeiten. Hierdurch kann zum Beispiel ein Flottenmanagement von Elektrofahrzeugen vereinfacht werden.

Gemäß der Erfindung ist vorgesehen, dass die Ladeeinrichtungen zusätzlich die erfasste eingeladene Energiemenge oder die die Energiemenge charakterisierende Kenngröße mit einer Zuordnung zu einer die Energiequelle eindeutig kennzeichnenden Energiequellenkennung in der Speichereinrichtung speichern und in der Energieverbrauchsaufstellung eine Unterscheidung der Energieverbrauchsdaten nach den bei den jeweiligen Ladevorgängen verwendeten Energiequellen erfolgt. Dies hat den Vorteil, dass die Energieverbrauchsdaten zusätzlich den einzelnen Energiequellen zugeordnet werden können, so dass leicht erkennbar ist, ob die Energiekosten beispielsweise bei einem Dienstwagen vom Arbeitgeber zu erstatten sind oder nicht. Durch die automatische Erfassung der Daten wird zudem eine verbesserte Manipulationssicherheit erreicht.

Gemäß der Erfindung ist vorgesehen, dass die Ladeeinrichtungen zusätzlich die erfasste eingeladene Energiemenge oder die die Energiemenge charakterisierende Kenngröße mit einer Zuordnung zu einer die jeweilige Ladeeinrichtung eindeutig kennzeichnen Ladeeinrichtungskennung in der Speichereinrichtung speichern. **In** der Energieverbrauchsaufstellung kann eine Unterscheidung der Energieverbrauchsdaten nach den bei den jeweiligen Ladevorgängen verwendeten Ladeeinrichtungen erfolgen. Dies hat den Vorteil, dass anhand der gespeicherten Daten auch die Nutzung der Ladeeinrichtungen nachverfolgt werden kann.

Die Erfindung wird nachfolgend anhand von Ausführungsbeispielen unter Verwendung von Zeichnungen näher erläutert. Es zeigen
- Figur 1: ein Ladekabel für ein Elektrofahrzeug und
- Figur 2: die Verbindung zwischen der Elektronik des Ladekabels und dem Elektrofahrzeug und
- Figur 3: ein am Ladeanschluss des Elektrofahrzeugs angestecktes Ladekabel und
- Figur 4: eine Haushaltssteckdose für die Energieentnahme und
- Figur 5: eine weitere Ausführungsform eines Ladekabels und
- Figur 6: ein System aus mehreren Ladeeinrichtungen und
- Figur 7: eine Auswertung der Energieverbrauchsdaten und
- Figur 8: eine weitere Auswertung der Energieverbrauchsdaten.

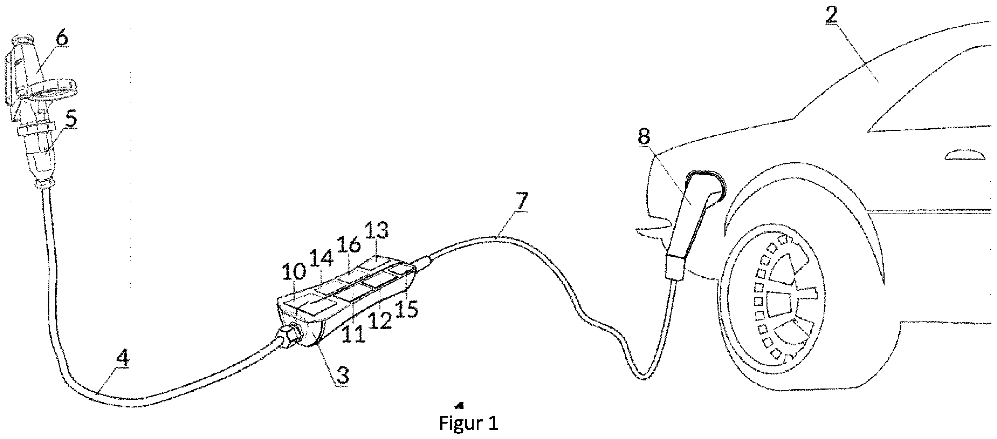

Figur 1 zeigt eine Ladeeinrichtung 1 in Form eines Ladekabels für ein Elektrofahrzeug 2, das eine Wechselspannung, wie sie in jedem Haushalt zur Verfügung steht, zum Aufladen der Antriebsbatterie an das Elektrofahrzeug 2 überträgt. Die Ladeeinrichtung 1 hat ein Gehäuse, in dem sich eine Elektronik 3 befindet, an die auf der einen Seite eine Leitung 4 mit einem CEE 16A Drehstromstecker 5 angeschlossen ist, um sie über diese Steckverbindung an die Elektro-Hausinstallation 6 anzuschließen. Auf der anderen Seite ist sie mit einer Leitung 7 verbunden, an deren Ende sich ein genormter Fahrzeug-Ladestecker 8 zum Laden der Antriebsbatterie befindet. Die Elektronik 3 übernimmt zu einen den Schutz gegen Überstrom und Fehlerströme, um Personen und Fahrzeug im Fehlerfall zu schützen, und zum anderen die Steuerung des Ladestroms zum Fahrzeug. Diese Art von Ladeeinrichtungen wird in der IEC EN 62752 als In-cable control and protection device (IC-CPD) bezeichnet. Nach dieser Regulierung kann die Elektronik auch aufgeteilt werden, wobei die Schutzelektronik sich dann in der Anschlusssteckverbindung zur Hausinstallation befindet, und die Steuerelektronik im Ladestecker 8 zum Fahrzeug.

In der Elektronik 3 ist eine Trennvorrichtung 10 enthalten, um die Leiterverbindung im Fehlerfall sicher zu trennen. Dazu sind in der Elektronik 3 Messmittel 11 vorhanden, um Fehlersituationen zu erkennen. Z.B. wird der durch die Leiter geführte Strom bestimmt, um eine Überlast zu erkennen, und es werden alle durch die Phasen und den Nullleiter geführten Ströme vorzeichenrichtig aufaddiert, um fehlerhafterweise abgeleitete Ströme zu erkennen. Dies geschieht sowohl für Gleichstrom als auch für Wechselstrom. Weiterhin sind Messmittel 12 vorhanden, um charakteristische Werte für die Ladung zu bestimmen. Diese sind beispielsweise die Spannungen, die Ströme, die Anzahl der stromführenden Leiter, die übertragene Leistung, die übertragene Energie und der allgemeine Ladestatus. Damit charakteristische Daten auch nach dem Ladevorgang noch abrufbar sind, befindet sich in der Elektronik 3 ein Speicher 13, in dem die Daten abgelegt sind. Auf einem Display 14, das sich in dem Elektronikgehäuse befindet, werden diese Informationen angezeigt.

Weiterhin ist in der Elektronik 3 eine Kommunikationseinheit 15 zur Kommunikation mit dem Fahrzeug 2 vorhanden, um ihm mitzuteilen, welche maximale Energie über das Ladekabel bezogen werden darf, um die Ladeeinrichtung 1 und die Hausinstallation 6 nicht zu überlasten. Dies geschieht über ein zum Fahrzeug 2 übertragenes PWM-Signal (Pulsweitenmodulation) oder über die Powerline-Kommunikation. Hierbei wird ein Hochfrequenzsignal auf die stromführenden Leitungen aufmoduliert und somit Daten übertragen. Bei der Powerline-Kommunikation werden Daten in beiden Richtungen übertragen, somit kennt die Elektronik 3 auch die Daten des Fahrzeugs 2, wie beispielsweise den Ladestand der Antriebsbatterie oder die Fahrzeugidentifikationsnummer.

Um die Informationen, die aus den Messungen hervorgehen oder vom Fahrzeug 2 erhalten wurden, zur Verfügung zu stellen, werden sie interaktiv auf dem Display 14 angezeigt, bzw. über verschiedene Möglichkeiten der Funkkommunikation eines Mobilfunkmoduls 16 der Elektronik 3 auf andere Geräte oder Server übertragen. Die Kommunikation geschieht dabei über die standardisierten Funkkommunikationen Bluetooth, WLAN oder 2G/3G/4G/5G Mobilfunk. Das Gerät, auf dem die Informationen angezeigt werden, verbindet sich entweder direkt mit der Elektronik 3 des Ladekabels, oder die Kommunikation läuft über Accesspoints oder die Cloud. Ebenfalls möglich ist, die Daten in der Cloud zu speichern, und sie mit einem Kommunikationsgerät dort abzurufen, ohne dass eine Verbindung zur Elektronik 3 des Ladekabels besteht.

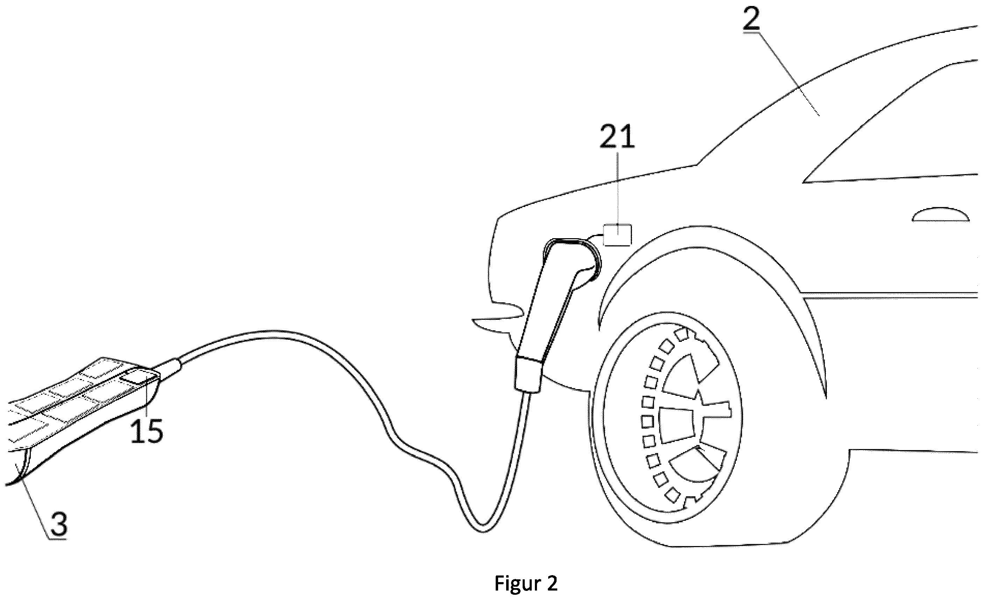

Figur 2 zeigt die Verbindung zwischen der Elektronik 3 des Ladekabels und dem Fahrzeug 2. Es besteht eine galvanische Verbindung durch die stromführenden Leiter, die die Energie übertragen. Dazu ist im Fahrzeug 2 eine Kommunikationseinrichtung 21 verbaut, die die Hochfrequenz der PLC (Powerline Communication) auf die stromführenden Leiter einkoppelt, um Daten zu senden, bzw. auskoppelt, um Daten zu Empfangen. In der Elektronik 3 ist eine ähnliche Kommunikationseinheit 15 verbaut, die als Kommunikationspartner zum Fahrzeug 2 dient. Es ist somit möglich, Daten in beide Richtungen zu übertragen. Zu den übertragenen Daten aus dem Fahrzeug 2 gehören beispielsweise eine eindeutige Kennung für das Fahrzeug, z.B. die Fahrzeugidentifikationsnummer, der Kilometerstand oder der Ladezustand der Antriebsbatterie bzw. die mit dem derzeitigen Ladezustand erreichbare Reichweite.

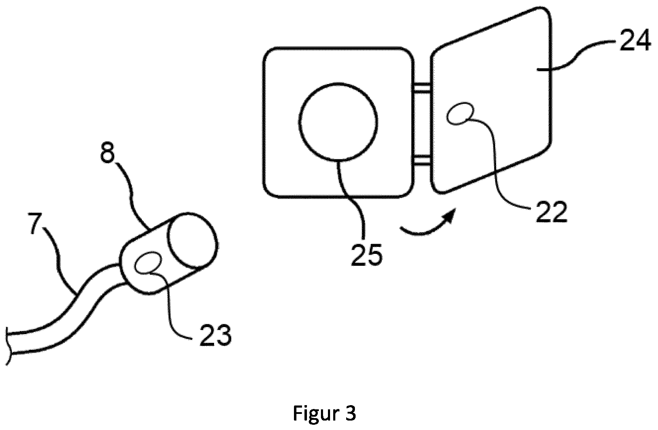

In Figur 3 ist eine Ausführung dieser Erfindung zu sehen für den Fall, dass das Fahrzeug die PLC-Kommunikation nicht unterstützt. Um das Fahrzeug dennoch eindeutig zu identifizieren, befindet sich im Ladestecker 8 des Ladekabels eine Nahfeldkommunikationseinrichtung 23. Diese ist in der Lage, eine Kommunikationsverbindung mit einem Kommunikationspartner über eine Entfernung bis zu wenigen Zentimetern aufzubauen. Der Kommunikationspartner kann dabei sowohl eine passive Einrichtung mit einer Lastmodulation sein, als auch ein aktives Gerät. Typische Kommunikationen für diesen Zweck nutzen die NFC- oder RFID-Technologie. In dieser Ausführung befindet der Kommunikationspartner, ein RFID-Tag 22, an der Schutzklappe 24 für die Ladesteckverbindung 25 im Fahrzeug.

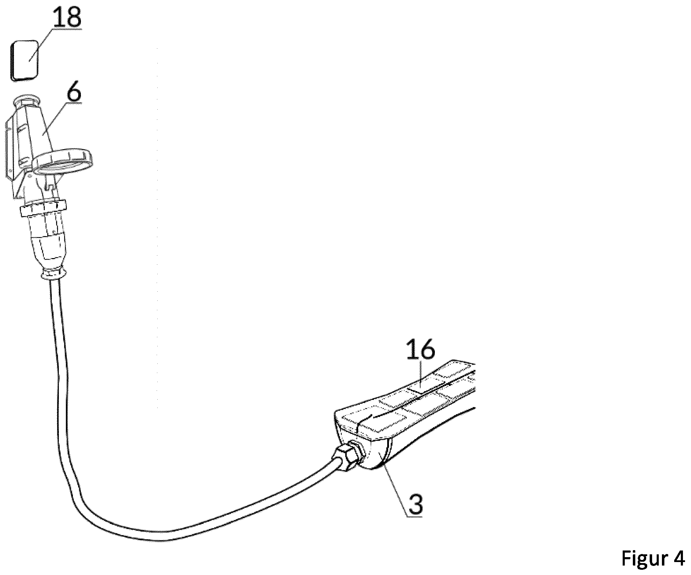

Die Figur 4 zeigt die Steckdose 6 für die Energieentnahme im Haushalt. In dieser Ausführung befindet sich ein Bluetooth-Beacon 18 fest installiert in unmittelbarer Nähe zur Steckdose 6. Beacons sind kleine Sender, die in regelmäßigen Abständen eine eindeutige Kennung aussenden. Als Technologie wird in dieser Ausführung die Bluetooth-Low-Energy-Technologie verwendet. Die Elektronik 3 im Ladekabel besitzt ebenfalls eine Bluetooth-Low-Energy-Kommunikationseinheit 16, die die eindeutige Kennung des Beacons 18 empfängt und die bezogene Energie dieser Abnahmestelle zuordnet.

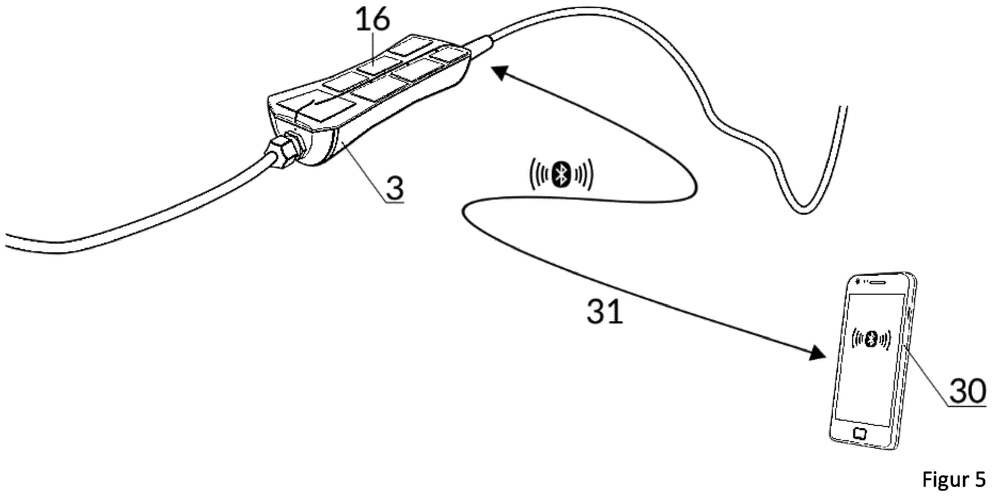

Figur 5 zeigt ein Ladekabel, das ebenfalls eine Bluetooth-Kommunikationseinrichtung 16 besitzt, wobei sie dieselbe sein kann, die auch die Informationen vom Beacon 18 erkennt. Das Bluetoothmodul 16 baut zusätzlich eine Kommunikationsverbindung 31 zu einem Smartphone 30 auf und überträgt die in der Elektronik 3 gespeicherten Daten zum Smartphone 30, wo sie visualisiert werden. Weiterhin können über eine Userinterface-Applikation (App) auf dem Smartphone 30 Einstellungen geändert werden, wobei die neuen Einstellungen über Bluetooth zur Elektronik 3 des Ladekabels übertragen und dort temporär oder dauerhaft gespeichert werden.

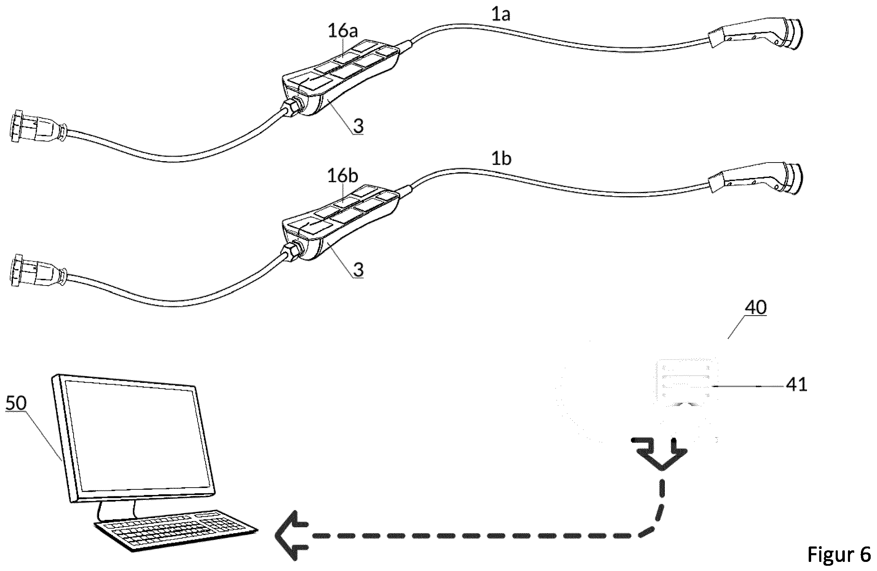

In Figur 6 ist ein System dargestellt, das mehrere Ladeeinrichtungen 1a, 1b und einen Speicher 41 in der Internetcloud 40 hat. Alle Ladeeinrichtungen 1a, 1b senden über deren Kommunikationsmodule 16a, 16b über einen Mobilfunkstandard ihre Daten zu einem Server mit dem Speicher 41 in der Internetcloud 40. Von einem PC-Arbeitsplatz 50, der ebenfalls über einen Internetzugang eine Verbindung zu diesem Server besitzt, werden die Daten abgerufen und visualisiert. Dabei können die Daten der verschiedenen Ladeeinrichtungen bereits auf dem Server 41 in der Cloud 40 vorverarbeitet und z.B. nach Fahrzeugen und Entnahmestellen aufsummiert sein, oder die Verarbeitung findet auf dem PC 50 basierend auf den in der Cloud gespeicherten Rohdaten statt.

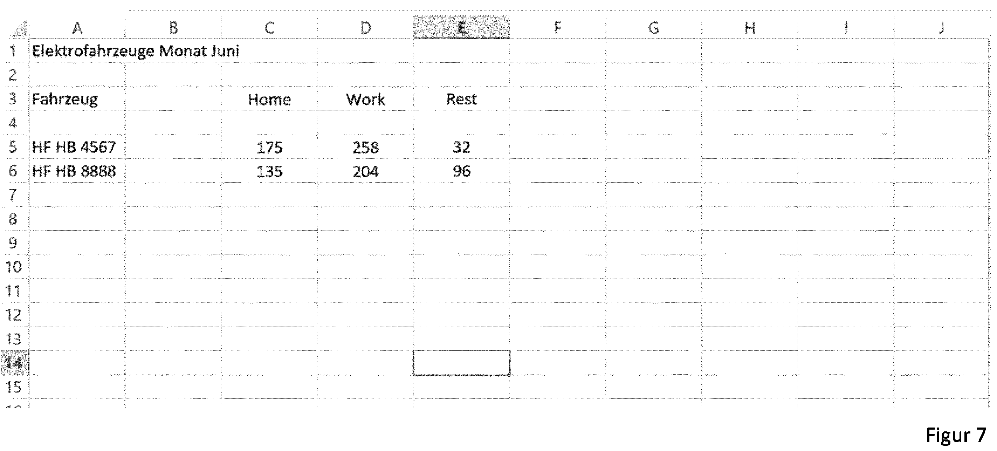

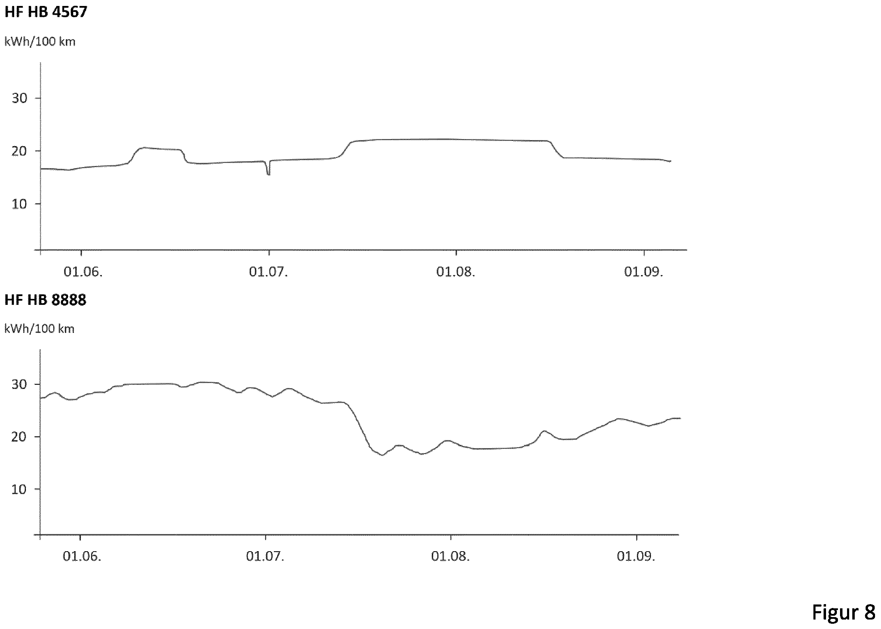

In Figur 7 ist ein Beispiel einer Auswertung zu sehen, wobei die von den Ladeeinrichtungen 1a, 1b übertragenen Energiemengen in einer Matrix nach Fahrzeugen und Entnahmestellen aufgelistet sind. Eine weitere Auswertung über den Energieverbrauch in kWh pro 100 km der einzelnen Fahrzeuge ist in Figur 8 ist sehen. Hierbei werden Daten über die pro Fahrzeug geladenen Energiemengen, den Kilometerständen und den Batteriezuständen jeweils am Ende der Ladung entsprechend verarbeitet.

## Patentansprüche

1. Ladeeinrichtung (1, 1a, 1b) zum Aufladen der Antriebsbatterie eines Elektrofahrzeugs (2) aus einer zum Aufladen der Antriebsbatterie geeigneten Energiequelle, wobei die Ladeeinrichtung (1, 1a, 1b) wenigstens einen Anschluss zum Verbinden mit dem Ladeanschluss des Elektrofahrzeugs (2) und wenigstens einen Anschluss zum Verbinden mit der zum Aufladen der Antriebsbatterie geeigneten Energiequelle hat, wobei
a) die Ladeeinrichtung (1, 1a, 1b) als portable, im Elektrofahrzeug (2) mitführbare Ladeeinrichtung (1, 1a, 1b) ausgebildet ist,
b) wobei die Ladeeinrichtung (1, 1a, 1b) dazu eingerichtet ist, eine das angeschlossene Elektrofahrzeug (2) eindeutig kennzeichnende Fahrzeugkennung zu erfassen,
c) wobei die Ladeeinrichtung (1, 1a, 1b) dazu eingerichtet ist, die bei einem Ladevorgang aus der Energiequelle in das Elektrofahrzeug (2) eingeladene Energiemenge oder eine die Energiemenge charakterisierende Kenngröße zu erfassen und mit einer Zuordnung zur Fahrzeugkennung des Elektrofahrzeugs (2) in einer Speichereinrichtung (13, 40, 41), die eine Speichereinrichtung (13) der Ladeeinrichtung (1, 1a, 1b) und/oder eine entfernte Speichereinrichtung (40, 41) sein kann, zu speichern,
**dadurch gekennzeichnet, dass**
d) die Ladeeinrichtung (1, 1a, 1b) dazu eingerichtet ist, eine die angeschlossene Energiequelle eindeutig kennzeichnende Energiequellenkennung zu erfassen,
e) wobei die Ladeeinrichtung (1, 1a, 1b) dazu eingerichtet ist, die erfasste eingeladene Energiemenge oder die die Energiemenge charakterisierende Kenngröße mit einer Zuordnung zur Energiequellenkennung der Energiequelle in der Speichereinrichtung (13, 40, 41) zu speichern,
f) wobei die Ladeeinrichtung (1, 1a, 1b) dazu eingerichtet ist, die erfasste eingeladene Energiemenge oder die die Energiemenge charakterisierende Kenngröße mit einer Zuordnung zu einer die Ladeeinrichtung (1, 1a, 1b) eindeutig kennzeichnenden Ladeeinrichtungskennung in der Speichereinrichtung (13, 40, 41) zu speichern,
g) wobei aus den in der Speichereinrichtung (13, 40, 41) gespeicherten Energieverbrauchsdaten für jedes einzelne Elektrofahrzeug (2) oder für jeweilige Gruppen von Elektrofahrzeugen (2) eine Energieverbrauchsaufstellung erstellbar ist.

2. Ladeeinrichtung (1, 1a, 1b) nach Anspruch 1, **dadurch gekennzeichnet, dass** die Ladeeinrichtung (1, 1a, 1b) dazu eingerichtet ist, anhand der Energiequellenkennung wenigstens einen Ladesteuerungsparameter zu bestimmen, wobei die Ladeeinrichtung (1, 1a, 1b) dazu eingerichtet ist, die an die Antriebsbatterie abgegebene Ladeleistung in Abhängigkeit vom Ladesteuerungsparameter einzustellen.

3. Ladeeinrichtung (1, 1a, 1b) nach einem der vorhergehenden Ansprüche, **dadurch gekennzeichnet, dass** die Ladeeinrichtung (1, 1a, 1b) wenigstens ein GNSS-Modul hat, wobei die Ladeeinrichtung (1, 1a, 1b) dazu eingerichtet ist, eine mittels des GNSS-Moduls erfasste globale Position in der Speichereinrichtung (13, 40, 41) zu speichern und/oder an einen Empfänger zu übertragen.

4. Ladeeinrichtung (1, 1a, 1b) nach einem der vorhergehenden Ansprüche, **dadurch gekennzeichnet, dass** die Ladeeinrichtung (1, 1a, 1b) eine Pufferbatterie aufweist, durch die zumindest Teile der Ladeeinrichtung (1, 1a, 1b) auch dann weiter mit elektrischer Energie versorgt sind, wenn die Ladeeinrichtung (1, 1a, 1b) nicht mit der zum Aufladen der Antriebsbatterie geeigneten Energiequelle verbunden ist.

5. Ladeeinrichtung (1, 1a, 1b) nach einem der vorhergehenden Ansprüche, **dadurch gekennzeichnet, dass** die Ladeeinrichtung (1, 1a, 1b) wenigstens eine Kommunikationsschnittstelle (15, 16, 16a, 16b) hat, wobei die Ladeeinrichtung (1, 1a, 1b) eine Kommunikationsfunktion hat, die dazu eingerichtet ist, über die Kommunikationsschnittstelle (15, 16, 16a, 16b) mit einem mobilen Endgerät (30) und/oder der zum Aufladen der Antriebsbatterie geeigneten oder angeschlossenen Energiequelle zu kommunizieren.

6. Ladeeinrichtung (1, 1a, 1b) nach Anspruch 5, **dadurch gekennzeichnet, dass** die Kommunikationsfunktion dazu eingerichtet ist, über die Kommunikationsschnittstelle (15, 16, 16a, 16b) wenigstens einen Ladesteuerungsparameter zu empfangen, wobei die Ladeeinrichtung (1, 1a, 1b) dazu eingerichtet ist, die an die Antriebsbatterie abgegebene Ladeleistung in Abhängigkeit vom empfangenen Ladesteuerungsparameter einzustellen.

7. Ladeeinrichtung (1, 1a, 1b) nach einem der Ansprüche 5 bis 6, **dadurch gekennzeichnet, dass** die Kommunikationsfunktion dazu eingerichtet ist, über die Kommunikationsschnittstelle (15, 16, 16a, 16b) den Ladezustand der Antriebsbatterie, die Ladegeschwindigkeit, die aktuelle Fahrreichweite des Elektrofahrzeugs (2) und/oder die verbleibende Zeit bis zum Erreichen eines bestimmten Ladezustands der Antriebsbatterie zu übertragen.

8. Ladeeinrichtung (1, 1a, 1b) nach einem der Ansprüche 5 bis 7, **dadurch gekennzeichnet, dass** die Kommunikationsfunktion dazu eingerichtet ist, über die Kommunikationsschnittstelle (15, 16, 16a, 16b) eine Angabe über die von der zum Aufladen der Antriebsbatterie geeigneten Energiequelle verfügbare Ladeleistung zu empfangen, wobei die Ladeeinrichtung (1, 1a, 1b) dazu eingerichtet ist, die an die Antriebsbatterie abgegebene Ladeleistung an die verfügbare Ladeleistung anzupassen, zumindest sofern diese die für die Antriebsbatterie maximal zulässige Ladeleistung nicht übersteigt.

9. Ladeeinrichtung (1, 1a, 1b) nach einem der vorhergehenden Ansprüche, **dadurch gekennzeichnet, dass** die Ladeeinrichtung (1, 1a, 1b) als Ladekabel oder Teil eines Ladekabels (4, 7) des Elektrofahrzeugs (2) ausgebildet ist.

10. Ladeeinrichtung (1, 1a, 1b) nach einem der vorhergehenden Ansprüche, **dadurch gekennzeichnet, dass** die Ladeeinrichtung (1, 1a, 1b) dazu eingerichtet ist, anhand der erfassten eingeladenen Energiemenge oder der die Energiemenge charakterisierenden Kenngröße wenigstens einen Parameter des aktuellen Ladevorgangs oder eines späteren Ladevorgangs zu beeinflussen.

11. Ladeeinrichtung (1, 1a, 1b) nach einem der vorhergehenden Ansprüche, **dadurch gekennzeichnet, dass** die Ladeeinrichtung (1, 1a, 1b) dazu eingerichtet ist, wenigstens einen Zeitparameter des Ladevorgangs zu erfassen, z.B. die Dauer des Ladevorgangs und/oder den aktuellen Zeitpunkt des Ladevorgangs, den wenigstens einen Zeitparameter mit wenigstens einem Referenz-Zeitparameter in Beziehung zu setzen und, wenn dabei die Erfüllung eines vorgegebenen Kriteriums festgestellt wird, über wenigstens eine Kommunikationsschnittstelle (15, 16, 16a, 16b) eine Nachricht an ein entferntes Gerät auszusenden und/oder ein Signal an der Ladeeinrichtung (1, 1a, 1b) auszugeben.

12. Verfahren zur Erfassung von Energieverbrauchsdaten beim Aufladen von Elektrofahrzeugen (2) aus verschiedenen Energiequellen, die jeweils zum Aufladen der Antriebsbatterie des jeweiligen Elektrofahrzeugs (2) geeignet sind, mit folgenden Schritten:
a) die für das Aufladen der Antriebsbatterie eines jeweiligen Elektrofahrzeugs (2) verwendeten Ladeeinrichtungen (1, 1a, 1b), die als portable, im Elektrofahrzeug (2) mitführbare Ladeeinrichtungen (1, 1a, 1b) ausgebildet sind, erfassen die bei einem Ladevorgang aus der jeweiligen Energiequelle in das Elektrofahrzeug (2) eingeladene Energiemenge oder eine die Energiemenge charakterisierende Kenngröße und speichern diese mit einer Zuordnung zu einer das Elektrofahrzeug (2) eindeutig kennzeichnenden Fahrzeugkennung als Energieverbrauchsdaten in einer Speichereinrichtung (13, 40, 41), die eine Speichereinrichtung (13) der Ladeeinrichtung (1, 1a, 1b) und/oder eine entfernte Speichereinrichtung (40, 41) sein kann,
**dadurch gekennzeichnet, dass**
b) die Ladeeinrichtungen (1, 1a, 1b) speichern zusätzlich die erfasste eingeladene Energiemenge oder die die Energiemenge charakterisierende Kenngröße mit einer Zuordnung zu einer die jeweilige Energiequelle eindeutig kennzeichnenden Energiequellenkennung in der Speichereinrichtung (13, 40, 41) und in der Energieverbrauchsaufstellung eine Unterscheidung der Energieverbrauchsdaten nach den bei den jeweiligen Ladevorgängen verwendeten Energiequellen erfolgt,
c) die Ladeeinrichtungen (1, 1a, 1b) speichern die erfasste eingeladene Energiemenge oder die die Energiemenge charakterisierende Kenngröße mit einer Zuordnung zu einer die Ladeeinrichtung (1, 1a, 1b) eindeutig kennzeichnenden Ladeeinrichtungskennung in der Speichereinrichtung (13, 40, 41),
d) aus den in der Speichereinrichtung (13, 40, 41) gespeicherten Energieverbrauchsdaten wird für jedes einzelne Elektrofahrzeug (2) oder für jeweilige Gruppen von Elektrofahrzeugen (2) eine Energieverbrauchsaufstellung erstellt.

13. Verfahren nach Anspruch 12, **dadurch gekennzeichnet, dass** in der Energieverbrauchsaufstellung eine Unterscheidung der Energieverbrauchsdaten nach den bei den jeweiligen Ladevorgängen verwendeten Ladeeinrichtungen (1, 1a, 1b) erfolgt.

## Claims

1. Charging device (1, 1a, 1b) for charging the traction battery of an electric vehicle (2) from an energy source suitable for charging the traction battery, the charging device (1, 1a, 1b) having at least one terminal for connection to the charging port of the electric vehicle (2) and at least one terminal for connection to the energy source suitable for charging the traction battery, wherein
a) the charging device (1, 1a, 1b) is designed as a portable charging device (1, 1a, 1b) that can be carried in the electric vehicle (2),
b) wherein the charging device (1, 1a, 1b) is set up to detect a vehicle identifier that clearly identifies the connected electric vehicle (2),
c) the charging device (1, 1a, 1b) being set up to detect the amount of energy charged from the energy source into the electric vehicle (2) during a charging process or a parameter characterizing the amount of energy and to store it in a storage device (13, 40, 41), which can be a storage device (13) of the charging device (1, 1a, 1b) and/or a remote storage device (40, 41), with an assignment to the vehicle identifier of the electric vehicle (2),
**characterized in that**
d) the charging device (1, 1a, 1b) is set up to detect an energy source identifier which uniquely identifies the connected energy source,
e) wherein the charging device (1, 1a, 1b) is set up to store the detected charged energy quantity or the parameter characterizing the energy quantity with an assignment to the energy source identification of the energy source in the storage device (13, 40, 41),
f) wherein the charging device (1, 1a, 1b) is set up to store the detected charged energy quantity or the parameter characterizing the energy quantity with an assignment to a charging device identifier uniquely identifying the charging device (1, 1a, 1b) in the storage device (13, 40, 41),
g) it being possible to create an energy consumption list for each individual electric vehicle (2) or for respective groups of electric vehicles (2) from the energy consumption data stored in the storage device (13, 40, 41).

2. Charging device (1, 1a, 1b) according to claim 1, **characterized in that** the charging device (1, 1a, 1b) is set up to determine at least one charging control parameter on the basis of the energy source identification, the charging device (1, 1a, 1b) being set up to adjust the charging power delivered to the traction battery as a function of the charging control parameter.

3. Charging device (1, 1a, 1b) according to one of the preceding claims, **characterized in that** the charging device (1, 1a, 1b) has at least one GNSS module, the charging device (1, 1a, 1b) being set up to store a global position detected by means of the GNSS module in the memory device (13, 40, 41) and/or to transmit it to a receiver.

4. Charging device (1, 1a, 1b) according to one of the preceding claims, **characterized in that** the charging device (1, 1a, 1b) has a buffer battery, by means of which at least parts of the charging device (1, 1a, 1b) continue to be supplied with electrical energy even if the charging device (1, 1a, 1b) is not connected to the energy source suitable for charging the traction battery.

5. Charging device (1, 1a, 1b) according to one of the preceding claims, **characterized in that** the charging device (1, 1a, 1b) has at least one communication interface (15, 16, 16a, 16b), the charging device (1, 1a, 1b) having a communication function which is set up to communicate via the communication interface (15, 16, 16a, 16b) with a mobile terminal (30) and/or the energy source suitable or connected for charging the traction battery.

6. Charging device (1, 1a, 1b) according to claim 5, **characterized in that** the communication function is set up to receive at least one charging control parameter via the communication interface (15, 16, 16a, 16b), the charging device (1, 1a, 1b) being set up to adjust the charging power delivered to the traction battery as a function of the charging control parameter received.

7. Charging device (1, 1a, 1b) according to one of claims 5 to 6, **characterized in that** the communication function is set up to transmit, via the communication interface (15, 16, 16a, 16b), the state of charge of the traction battery, the charging speed, the current driving range of the electric vehicle (2) and/or the remaining time until a specific state of charge of the traction battery is reached.

8. Charging device (1, 1a, 1b) according to one of claims 5 to 7, **characterized in that** the communication function is set up to receive, via the communication interface (15, 16, 16a, 16b), an indication of the charging power available from the energy source suitable for charging the traction battery, the charging device (1, 1a, 1b) being set up to adapt the charging power delivered to the traction battery to the available charging power, at least insofar as this does not exceed the maximum permissible charging power for the traction battery.

9. Charging device (1, 1a, 1b) according to one of the preceding claims, **characterized in that** the charging device (1, 1a, 1b) is designed as a charging cable or part of a charging cable (4, 7) of the electric vehicle (2).

10. Charging device (1, 1a, 1b) according to one of the preceding claims, **characterized in that** the charging device (1, 1a, 1b) is set up to influence at least one parameter of the current charging process or of a subsequent charging process on the basis of the detected charged amount of energy or the parameter characterizing the amount of energy.

11. Charging device (1, 1a, 1b) according to one of the preceding claims, **characterized in that** the charging device (1, 1a, 1b) is set up to detect at least one time parameter of the charging process, for example the duration of the charging process and/or the current time of the charging process, to relate the at least one time parameter to at least one reference time parameter and, if the fulfillment of a predetermined criterion is determined in the process, to transmit a message to a remote device via at least one communication interface (15, 16, 16a, 16b) and/or to output a signal at the charging device (1, 1a, 1b).

12. Method for recording energy consumption data when charging electric vehicles (2) from different energy sources, each of which is suitable for charging the traction battery of the respective electric vehicle (2), comprising the following steps:
a) the charging devices (1, 1a, 1b) used for charging the traction battery of a respective electric vehicle (2), which are designed as portable charging devices (1, 1a, 1b) that can be carried in the electric vehicle (2), detect the amount of energy charged into the electric vehicle (2) from the respective energy source during a charging process or a parameter characterizing the amount of energy and store it as energy consumption data in a storage device (13, 40, 41), which can be a storage device (13) of the charging device (1, 1a, 1b) and/or a remote storage device (40, 41), with an assignment to a vehicle identifier uniquely identifying the electric vehicle (2),
**characterized in that**
b) the charging devices (1, 1a, 1b) additionally store the recorded amount of charged energy or the parameter characterizing the amount of energy with an assignment to an energy source identifier uniquely identifying the respective energy source in the storage device (13, 40, 41) and in the energy consumption list a distinction is made between the energy consumption data according to the energy sources used in the respective charging processes,
c) the charging devices (1, 1a, 1b) store the detected charged energy quantity or the parameter characterizing the energy quantity with an assignment to a charging device identifier uniquely identifying the charging device (1, 1a, 1b) in the storage device (13, 40, 41),
d) the energy consumption data stored in the storage device (13, 40, 41) is used to create an energy consumption list for each individual electric vehicle (2) or for respective groups of electric vehicles (2).

13. Method according to claim 12, **characterized in that** the energy consumption data are differentiated in the energy consumption list according to the charging devices (1, 1a, 1b) used in the respective charging processes.

## Revendications

1. Dispositif de charge (1, 1a, 1b) pour charger la batterie d'entraînement d'un véhicule électrique (2) à partir d'une source d'énergie appropriée pour charger la batterie d'entraînement, le dispositif de charge (1, 1a, 1b) présentant au moins une borne pour la connexion à la borne de charge du véhicule électrique (2) et au moins une borne pour la connexion à la source d'énergie appropriée pour charger la batterie d'entraînement,
dans lequel
a) le dispositif de charge (1, 1a, 1b) est conçu comme un dispositif de charge portable (1, 1a, 1b) pouvant être emporté dans le véhicule électrique (2),
b) le dispositif de charge (1, 1a, 1b) est conçu pour détecter un identifiant de véhicule caractérisant de manière univoque le véhicule électrique (2) connecté,
c) le dispositif de charge (1, 1a, 1b) est conçu pour détecter la quantité d'énergie, chargée dans le véhicule électrique (2) à partir de la source d'énergie lors d'une opération de charge, ou une grandeur caractéristique caractérisant la quantité d'énergie, et pour la mémoriser avec une association à l'identifiant du véhicule électrique (2) dans un dispositif de mémoire (13, 40, 41) qui peut être un dispositif de mémoire (13) du dispositif de charge (1, 1a, 1b) et/ou un dispositif de mémoire distant (40, 41),
**caractérisé en ce que**
d) le dispositif de charge (1, 1a, 1b) est conçu pour détecter un identifiant de source d'énergie caractérisant de manière univoque la source d'énergie connectée,
e) le dispositif de charge (1, 1a, 1b) étant conçu pour mémoriser dans le dispositif de mémoire (13, 40, 41) la quantité d'énergie chargée détectée ou la grandeur caractéristique caractérisant la quantité d'énergie, avec une association à l'identifiant de la source d'énergie,
f) le dispositif de charge (1, 1a, 1b) étant conçu pour mémoriser dans le dispositif de mémoire (13, 40, 41) la quantité d'énergie chargée détectée ou la grandeur caractéristique caractérisant la quantité d'énergie avec une association à un identifiant de dispositif de charge caractérisant de manière univoque le dispositif de charge (1, 1a, 1b),
g) un relevé de la consommation d'énergie pouvant être établi pour chaque véhicule électrique individuel (2) ou pour des groupes respectifs de véhicules électriques (2) à partir des données de consommation d'énergie mémorisées dans le dispositif de mémoire (13, 40, 41).

2. Dispositif de charge (1, 1a, 1b) selon la revendication 1,
**caractérisé en ce que** le dispositif de charge (1, 1a, 1b) est conçu pour déterminer au moins un paramètre de commande de charge à l'aide de l'identifiant de la source d'énergie, le dispositif de charge (1, 1a, 1b) étant conçu pour ajuster la puissance de charge délivrée à la batterie d'entraînement en fonction du paramètre de commande de charge.

3. Dispositif de charge (1, 1a, 1b) selon l'une des revendications précédentes,
**caractérisé en ce que** le dispositif de charge (1, 1a, 1b) comprend au moins un module GNSS, le dispositif de charge (1, 1a, 1b) étant conçu pour mémoriser dans le dispositif de mémoire (13, 40, 41) et/ou transmettre à un récepteur une position globale acquise au moyen du module GNSS.

4. Dispositif de charge (1, 1a, 1b) selon l'une des revendications précédentes,
**caractérisé en ce que** le dispositif de charge (1, 1a, 1b) comprend une batterie tampon grâce à laquelle au moins des parties du dispositif de charge (1, 1a, 1b) continuent à être alimentées en énergie électrique même lorsque le dispositif de charge (1, 1a, 1b) n'est pas connecté à la source d'énergie appropriée pour charger la batterie d'entraînement.

5. Dispositif de charge (1, 1a, 1b) selon l'une des revendications précédentes,
**caractérisé en ce que** le dispositif de charge (1, 1a, 1b) comprend au moins une interface de communication (15, 16, 16a, 16b), le dispositif de charge (1, 1a, 1b) ayant une fonction de communication conçue pour communiquer, via l'interface de communication (15, 16, 16a, 16b), avec un terminal mobile (30) et/ou avec la source d'énergie connectée ou appropriée pour charger la batterie d'entraînement.

6. Dispositif de charge (1, 1a, 1b) selon la revendication 5,
**caractérisé en ce que** la fonction de communication est conçue pour recevoir, via l'interface de communication (15, 16, 16a, 16b), au moins un paramètre de commande de charge, le dispositif de charge (1, 1a, 1b) étant conçu pour ajuster la puissance de charge délivrée à la batterie d'entraînement en fonction du paramètre de commande de charge reçu.

7. Dispositif de charge (1, 1a, 1b) selon l'une des revendications 5 à 6,
**caractérisé en ce que** la fonction de communication est conçue pour transmettre, via l'interface de communication (15, 16, 16a, 16b), l'état de charge de la batterie d'entraînement, la vitesse de charge, l'autonomie actuelle du véhicule électrique (2) et/ou le temps restant pour atteindre un état de charge déterminé de la batterie d'entraînement.

8. Dispositif de charge (1, 1a, 1b) selon l'une des revendications 5 à 7,
**caractérisé en ce que** la fonction de communication est conçue pour recevoir, via l'interface de communication (15, 16, 16a, 16b), une indication de la puissance de charge mise à disposition par la source d'énergie appropriée pour charger la batterie d'entraînement, le dispositif de charge (1, 1a, 1b) étant conçu pour adapter la puissance de charge, délivrée à la batterie d'entraînement, à la puissance de charge disponible, au moins dans la mesure où celle-ci ne dépasse pas la puissance de charge maximale admissible pour la batterie d'entraînement.

9. Dispositif de charge (1, 1a, 1b) selon l'une des revendications précédentes,
**caractérisé en ce que** le dispositif de charge (1, 1a, 1b) est réalisé sous forme de câble de charge ou de partie de câble de charge (4, 7) du véhicule électrique (2).

10. Dispositif de charge (1, 1a, 1b) selon l'une des revendications précédentes,
**caractérisé en ce que** le dispositif de charge (1, 1a, 1b) est conçu pour influencer au moins un paramètre de l'opération de charge actuelle ou d'une opération de charge ultérieure à l'aide de la quantité d'énergie chargée détectée ou de la grandeur caractéristique caractérisant la quantité d'énergie.

11. Dispositif de charge (1, 1a, 1b) selon l'une des revendications précédentes,
**caractérisé en ce que** le dispositif de charge (1, 1a, 1b) est conçu pour détecter au moins un paramètre temporel de l'opération de charge, par exemple la durée de l'opération de charge et/ou l'instant actuel de l'opération de charge, pour mettre en relation ledit au moins un paramètre temporel avec au moins un paramètre temporel de référence et, si l'on constate alors qu'un critère prédéfini est satisfait, pour envoyer un message à un appareil distant via au moins une interface de communication (15, 16, 16a, 16b) et/ou pour émettre un signal au niveau du dispositif de charge (1, 1a, 1b).

12. Procédé de saisie de données de consommation d'énergie lors de la charge de véhicules électriques (2) à partir de différentes sources d'énergie qui sont chacune appropriées pour charger la batterie d'entraînement du véhicule électrique respectif (2), comprenant les étapes suivantes :
a) les dispositifs de charge (1, 1a, 1b) utilisés pour la charge de la batterie d'entraînement d'un véhicule électrique (2) respectif, qui sont conçus comme des dispositifs de charge (1, 1a, 1b) portables pouvant être emportés dans le véhicule électrique (2), détectent la quantité d'énergie, chargée dans le véhicule électrique (2) à partir de la source d'énergie respective lors d'une opération de charge, ou une grandeur caractéristique caractérisant la quantité d'énergie et mémorisent celle-ci avec une association à un identifiant de véhicule, caractérisant de manière univoque le véhicule électrique (2), en tant que données de consommation d'énergie dans un dispositif de mémoire (13, 40, 41) qui peut être un dispositif de mémoire (13) du dispositif de charge (1, 1a, 1b) et/ou un dispositif de mémoire (40, 41) distant,
**caractérisé en ce que**
b) les dispositifs de charge (1, 1a, 1b) mémorisent en outre dans le dispositif de mémoire (13, 40, 41) la quantité d'énergie chargée détectée ou la grandeur caractéristique caractérisant la quantité d'énergie, avec une association à un identifiant de source d'énergie caractérisant de manière univoque la source d'énergie respective et, dans le relevé de la consommation d'énergie, une distinction entre les données de consommation d'énergie s'effectue selon les sources d'énergie utilisées lors des opérations de charge respectives,
c) les dispositifs de charge (1, 1a, 1b) mémorisent dans le dispositif de mémoire (13, 40, 41) la quantité d'énergie chargée détectée ou la grandeur caractéristique caractérisant la quantité d'énergie, avec une association à un identifiant de dispositif de charge caractérisant de manière univoque le dispositif de charge (1, 1a, 1b),
d) à partir des données de consommation d'énergie mémorisées dans le dispositif de mémoire (13, 40, 41), un relevé de la consommation d'énergie est établi pour chaque véhicule électrique (2) individuel ou pour des groupes respectifs de véhicules électriques (2).

13. Procédé selon la revendication 12, **caractérisé en ce que**, dans le relevé de la consommation d'énergie, une distinction entre les données de consommation d'énergie s'effectue selon les dispositifs de charge (1, 1a, 1b) utilisés lors des opérations de charge respectives.
